# FASCICULE DE BREVET EUROPEEN

(11) **EP 1 300 333 B1**
(45) Date de publication et mention de la délivrance du brevet: **22.03.2006**
(21) Numéro de dépôt: 02292401.3
(22) Date de dépôt: 30.09.2002
(51) Int. Cl.: B64C 1/14

(54) **Dispositif de fixation d'un pare-brise d'aeronef**
Befestigungsvorrichtung einer Windschutzscheibe eines Flugzeuges
Windscreen fixing device for an aircraft

(30) Priorité: 02.10.2001 FR 0112661
(43) Date de publication de la demande: 09.04.2003
(73) Titulaire: AIRBUS France, 31060 Toulouse Cedex 03 (FR)
(72) Inventeur: Dazet, Francis, 31410 Aucamville (FR); Chaumel, Pascal, 31830 Plaisance du Touch (FR); Cavailles, Guy, 31490 Leguevim (FR); Beucher, Jean-Christian, 31000 Toulouse (FR)
(74) Mandataire: Poulin, Gérard

(56) Documents cités:
- EP-A- 0 893 340
- DE-A- 4 116 397
- FR-A- 1 537 215
- US-A- 2 482 770

## Description

### Domaine technique

L'invention concerne un dispositif permettant de réaliser la fixation d'un pare-brise sur une structure d'aéronef.

L'invention s'applique à tous les types d'aéronefs et notamment aux avions civils et militaires ainsi qu'aux hélicoptères.

### Etat de la technique

De façon connue, un pare-brise d'aéronef est généralement fixé sur la structure de cet aéronef au moyen de plusieurs brides de fixation assujetties à ladite structure par des vis à têtes fraisées. Plus précisément, les bords extérieurs du pare-brise sont serrés entre les brides et la structure de l'aéronef. Un mastic d'étanchéité tel qu'un mastic polysulfure (connu en aéronautique sous l'appellation "PR") recouvre les différentes surfaces en contact et remplit les interstices.

Selon une première technique de fixation connue, illustrée notamment par le document US-A-5 277 384 et aussi par le document FR-A-1,537,125 (qui montre toutes les caractéristiques du préambule de la revendication 1), les vis de fixation à tête fraisée traversent des trous prévus à cet effet dans le pare-brise, près des bords extérieurs de celui-ci.

Cette technique connue présente l'inconvénient que les vis de fixation appliquent des contraintes mécaniques sur le pare-brise, ce qui entraîne des risques de briser celui-ci. Ces contraintes peuvent notamment être dues à des déformations de la structure de l'avion dans des conditions extrêmes de vol et à la différence de dilatation du pare-brise en verre et des brides et structure en métal, lors des changements de température qui se produisent lors des phases de montée et de descente de l'aéronef.

Selon une autre technique de fixation connue, les bords extérieurs du pare-brise sont recouverts d'un joint sec tel qu'un joint en silicone et les différentes brides sont fixées sur la structure de l'aéronef par des vis à têtes fraisées qui ne traversent pas le pare-brise. Le pare-brise est alors serré sur son joint périphérique, entre les différentes brides et la structure de l'aéronef.

Par rapport à la première technique connue décrite précédemment, cette seconde technique connue permet de diminuer les risques de briser le pare-brise. Toutefois, l'une et l'autre de ces deux techniques présentent d'autres inconvénients, qui vont à présent être exposés.

Les deux techniques connues à ce jour pour fixer les pare-brise des aéronefs utilisent des vis à têtes fraisées. Ces vis sont choisies parce que leurs têtes ne font pas saillie à l'extérieur du fuselage, ce qui évite de dégrader les performances aérodynamiques de l'aéronef. Ainsi, la tête de chaque vis prend appui sur une extrémité conique d'un trou de fixation usiné à cet effet dans la bride de fixation correspondante. Le serrage de chacune des vis a donc pour effet de réaliser un centrage de la partie conique du trou sur l'axe de la vis.

Toutefois, étant donné que chacune des brides est généralement fixée sur la structure de l'aéronef au moyen d'un nombre élevé de vis, chacune d'entre elles a pour effet de centrer ladite bride sur son propre trou de fixation, lors du serrage. Afin que les effets de centrage des vis ne soient pas antagonistes entre eux, il convient donc que les différents trous de fixation réalisés dans la structure de l'avion pour recevoir les vis communes à une même bride soient parfaitement alignés avec les trous réalisés dans ladite bride.

Cela nécessite une grande précision d'usinage qui se traduit par un coût de réalisation élevé.

De plus, malgré les précautions prises pendant l'usinage des trous, il peut parfois arriver que l'un au moins d'entre eux présente un léger défaut d'alignement.

En outre, selon les conditions de mise en oeuvre et notamment les températures des différentes pièces en présence, il peut exister des différences de dilatation entre les brides et la structure de l'aéronef, ce qui peut entraîner des problèmes d'alignement de certains trous. Dans ce cas, la tête de la vis ne peut pas venir se loger correctement dans la partie conique de la bride prévue pour la recevoir. Cela a pour effet de laisser subsister un interstice entre la vis et l'extrémité conique du trou. Cet interstice permet à l'humidité de pénétrer entre la vis et la bride, ce qui risque d'entraîner une corrosion de la structure de l'aéronef et/ou un grippage de la vis, rendant difficile un démontage ultérieur du pare-brise.

De surcroît, des vis dont les têtes ne sont pas parfaitement logées dans les extrémités coniques des trous constituent des points d'impact privilégiés pour la foudre. Si l'une des vis est touchée par la foudre, des dégâts importants, tels que des endommagements de la structure ou de la bride, sont souvent causés à l'aéronef.

D'autres inconvénients des techniques de fixation connues des pare-brise des aéronefs concernent la difficulté de démontage du pare-brise lorsque celui-ci doit être remplacé, ce qui se produit généralement plusieurs fois au cours de la vie d'un aéronef.

Un premier inconvénient découle du fait que le mastic PR adhère très fortement sur les surfaces auxquelles il est appliqué. Le démontage des différentes pièces liées par ce mastic est donc particulièrement difficile. Le mastic doit être coupé avec des outils tels que des raclettes, dont l'utilisation n'est pas sans inconvénient pour le personnel et pour les éléments de structure de l'aéronef. De plus, en cas d'utilisation d'outils non appropriés, le risque de dégrader la qualité du travail effectué est augmenté.

Un autre inconvénient qui apparaît lors du démontage concerne l'enlèvement des vis. Après plusieurs années d'exploitation d'un aéronef, il arrive parfois que certaines vis présentent un phénomène de grippage. Ce risque est accru pour les vis reçues dans des trous non alignés comme décrit précédemment. Dans ce cas, les vis sont d'autant plus difficiles à enlever qu'elles sont manoeuvrées par un tournevis, qui ne permet pas d'appliquer un couple aussi élevé qu'il serait souhaitable afin de pouvoir les dévisser. De plus, les glissements répétés du tournevis sur la tête de la vis, qui sont fréquents en présence d'un phénomène de grippage, endommagent souvent la tête de la vis, ce qui rend le dévissage encore plus difficile. En outre, ces glissements risquent de provoquer un dérapage du tournevis, susceptible d'endommager la bride ou la structure de l'aéronef.

De surcroît, il existe de nombreux profils de tournevis. Les personnels chargés des opérations de maintenance sont donc amenés à disposer d'un nombre important d'outils parmi lesquels ils doivent choisir celui qui est approprié au démontage de la vis concernée. Ce choix de tournevis sur le chantier de maintenance peut entraîner une perte de temps et, par conséquent, une augmentation du coût de remplacement du pare-brise. De plus, étant donné le nombre important d'outils dont disposent généralement les personnels de maintenance, un risque d'erreur dans le choix du tournevis approprié ne peut pas être totalement exclu.

Les inconvénients ci-dessus concernant le démontage d'un pare-brise ont aussi pour conséquence un temps de démontage élevé. Cela est pénalisant pour la compagnie aérienne puisque l'aéronef est alors indisponible et donc improductif. Le caractère pénalisant est encore accru si le remplacement du pare-brise doit être effectué lors d'une escale de l'aéronef puisqu'il en résulte un retard pour les passagers ou même l'annulation du vol. Si ce retard est important, il convient alors d'héberger les passagers, ce qui peut parfois poser des problèmes de structures d'accueil, surtout si le nombre des passagers transportés est important.

D'autres inconvénients des techniques de fixation connues de pare-brise d'aéronefs sont liés à l'utilisation du mastic PR pour assurer l'étanchéité. Après son application, ce mastic nécessite un temps de polymérisation de plusieurs heures avant de pouvoir faire décoller l'aéronef. Cela augmente encore la durée d'immobilisation de l'aéronef et les inconvénients qui en résultent. De plus, selon les modèles d'aéronefs et notamment s'ils proviennent de fabricants différents, il peut être nécessaire d'employer un type de mastic PR spécifique. Cela peut parfois poser des problèmes d'approvisionnement sur les chantiers de maintenance.

### Exposé de l'invention

L'invention a précisément pour objet un dispositif de fixation d'un pare-brise d'aéronef, dont la conception originale lui permet d'assurer une bonne étanchéité à l'humidité de l'extérieur de l'aéronef vers l'intérieur du cockpit et une bonne étanchéité à l'air de l'intérieur du cockpit vers l'extérieur de l'aéronef, aussi bien lorsque le différentiel de pression entre l'intérieur du cockpit et l'extérieur de l'aéronef est positif que lorsqu'il est négatif, en dégradant le moins possible les performances aérodynamiques de l'aéronef et sans présenter les inconvénients des techniques de fixation de l'art antérieur.

Conformément à l'invention, ce résultat est obtenu au moyen d'un dispositif de fixation d'une glace de pare-brise sur une structure d'aéronef, caractérisé en ce qu'il comprend une bride monobloc, des vis munies de têtes, aptes à fixer la bride sur ladite structure en emprisonnant entre elles un bord périphérique de ladite glace de pare-brise, et un premier joint sec d'étanchéité monobloc encerclant ledit bord périphérique, de façon à assurer à lui seul une étanchéité entre l'intérieur et l'extérieur de l'aéronef, dans lequel les têtes des vis sont en contact avec ladite bride par des surfaces planes orthogonales aux axes desdites vis.

L'utilisation d'une bride monobloc venant serrer le premier joint sec sur tout le bord périphérique du pare-brise permet d'assurer l'étanchéité entre l'intérieur et l'extérieur de l'aéronef sans utiliser de mastic polymérisable tel que du mastic PR.

Ainsi, lors de la mise en place du pare-brise, il n'est pas nécessaire d'appliquer un mastic et d'attendre plusieurs heures sa polymérisation, ce qui permet de réduire notablement la durée d'immobilisation de l'aéronef. En outre, l'absence de mastic simplifie le démontage du pare-brise, ce qui permet également de réduire le temps nécessaire au remplacement du pare-brise et donc encore la durée d'immobilisation de l'aéronef.

Avantageusement, le dispositif comprend de plus au moins un deuxième joint sec d'étanchéité monobloc, logé dans une rainure formée dans une face de la bride tournée vers la structure, de façon à assurer à lui seul une étanchéité entre la bride et ladite structure. Ce deuxième joint sec assure l'étanchéité entre la bride et la structure de l'aéronef sans utiliser de mastic.

Le deuxième joint sec d'étanchéité monobloc peut notamment être de forme généralement plane, de façon à être traversé par chacune des vis.

Avantageusement, le deuxième joint sec d'étanchéité, de forme généralement plane, comporte alors des renflements annulaires qui entourent chacune des vis, de façon à être en contact avec celles-ci.

Avantageusement, les têtes des vis sont logées dans des creux réalisés dans une face de la bride tournée vers l'extérieur de l'aéronef, de façon à ne pas faire saillie sur ladite face.

Selon un premier mode de réalisation, chacun des creux est alors fermé par un cabochon qui affleure ladite face de la bride tournée vers l'extérieur de l'aéronef. Chacun des cabochons est avantageusement traversé par un trou de petite section, assurant l'équilibre des pressions entre le creux dans lequel est reçue la tête de la vis et l'extérieur de l'aéronef. De préférence, chacun des cabochons est fixé dans le creux de la bride par emboîtement.

Selon un deuxième mode de réalisation, les creux sont recouverts par au moins un profilé qui matérialise au moins une partie de ladite face de la bride.

Avantageusement, les têtes des vis sont recouvertes d'une substance, telle que de la graisse ou de la vaseline, apte à limiter la pénétration de l'humidité et donc le grippage des vis.

De préférence, le premier joint sec d'étanchéité monobloc comporte des stries sur une face de ce premier joint tournée vers l'extérieur de l'aéronef et en contact avec ladite bride. Ces stries permettent d'empêcher l'humidité de pénétrer dans l'épaisseur de la structure du cockpit, ce qui risquerait d'entraîner une corrosion de celle-ci.

Un troisième joint sec d'étanchéité, de forme annulaire, peut être placé entre la bride et la structure, autour de chacune des vis.

Au moins un autre joint sec d'étanchéité monobloc peut aussi être monté sur un bord périphérique de la bride, tourné vers l'extérieur par rapport à la glace de pare-brise.

### Brève description des dessins

On décrira à présent, à titre d'exemples illustratifs et non limitatifs, différents modes de réalisation préférés de l'invention, en se référant aux dessins annexés, dans lesquels :
- la figure 1 est une vue en perspective éclatée qui représente un dispositif de fixation de pare-brise d'aéronef selon un premier mode de réalisation de l'invention ;
- la figure 2 est une vue en coupe transversale du dispositif de fixation de pare-brise de la figure 1 ;
- la figure 3 est une section agrandie d'un joint sec d'étanchéité monobloc du dispositif de fixation des figures 1 et 2 ; et
- la figure 4 est une vue en coupe comparable à la figure 2, illustrant un deuxième mode de réalisation de l'invention.

### Description détaillée des modes de réalisation préférés de l'invention

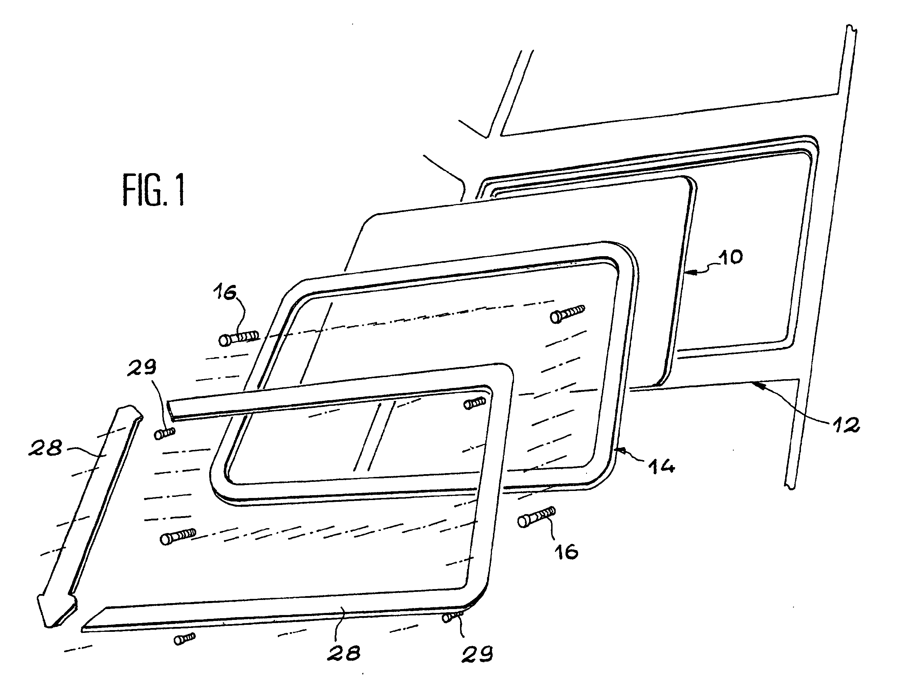

Les figures 1 à 3 illustrent un premier mode de réalisation de l'invention.

Plus précisément, on a représenté sur ces figures un dispositif conforme à l'invention, conçu pour assurer la fixation d'une glace 10 d'un pare-brise d'avion sur une structure 12 dudit avion. Pour simplifier, seule l'une des glaces 10 est représentée, avec son dispositif de fixation. Dans la pratique, le pare-brise comporte plusieurs glaces dont chacune est montée sur la structure de l'avion par un dispositif de fixation particulier.

Chacune des glaces 10 du pare-brise présente une face tournée vers l'extérieur de l'avion, dite "face extérieure", et une face tournée vers l'intérieur du cockpit, dite "face intérieure". La partie de la structure 12 sur laquelle est fixée chacune des glaces du pare-brise est matérialisée par un cadre qui encercle ladite glace 10.

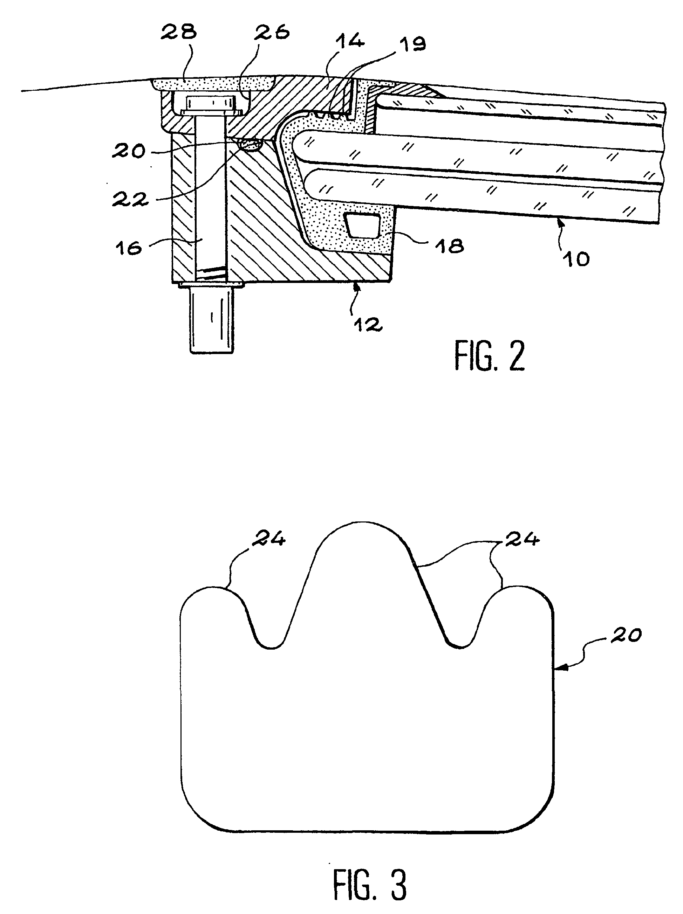

Comme le montrent en particulier les figures 1 et 2, le dispositif de fixation selon l'invention comprend une bride monobloc 14 dont la forme est comparable à celle du cadre formé par la structure 12 autour de la glace 10. La forme de la bride monobloc 14 est également comparable à celle du bord périphérique de la glace 10.

La bride monobloc 14 est prévue pour être fixée sur le cadre formé par la structure 12 autour de la glace 10, au moyen de vis 16 dont la structure et l'agencement seront décrits ultérieurement. Plus précisément, la bride monobloc 14 est montée sur une face dudit cadre tournée vers l'extérieur de l'avion, de façon à emprisonner le bord périphérique de la glace 10 entre la bride et la structure de l'avion lorsque ladite bride est fixée sur celle-ci.

La bride monobloc 14 est de préférence réalisée en métal, par des moyens modernes d'usinage tel que l'usinage à grande vitesse sur une machine à commande numérique. Ces moyens d'usinage permettent de diminuer les déformations de la bride pendant l'usinage. En effet, la bride monobloc peut être assimilée à un ruban étroit, facilement déformable.

Conformément à l'invention, le dispositif de fixation comprend également un premier joint sec d'étanchéité monobloc 18, qui encercle intégralement le bord périphérique de la glace 10. Ce premier joint sec 18 peut notamment être réalisé en silicone. La forme présentée en section par le premier joint sec 18 est telle qu'il enveloppe complètement le bord de la glace, de sorte que celle-ci n'est jamais en contact direct avec le support 12, ni avec la bride 14.

Ainsi, lorsque la bride monobloc 14 est serrée sur le support 12 par les vis 16, le premier joint sec 18 qui encercle le bord périphérique de la glace 10 est comprimé de telle sorte que ledit joint 18 assure à lui seul l'étanchéité entre l'intérieur et l'extérieur de l'avion sur la totalité du pourtour de la glace 10.

Comme on l'a représenté sur la figure 2, le premier joint sec 18 comprend de préférence des stries 19, sur une face dudit joint tournée vers l'extérieur de l'aéronef et prévue pour être en contact avec la bride 14 lorsque celle-ci est fixée sur le support 12 par les vis 16.

Les stries 19 permettent d'améliorer l'étanchéité assurée par le premier joint sec 18. En effet, elles réduisent les possibilités de pénétration de l'humidité dans le cockpit en imposant à celle-ci un cheminement en forme de labyrinthe. En outre, du fait que les stries 19 sont situées du côté de la face extérieure du pare-brise, on empêche l'humidité de pénétrer dans l'épaisseur de la structure du cockpit, ce qui risquerait dans certains cas d'entraîner une corrosion de ladite structure.

Conformément à l'invention, le dispositif de fixation de la glace 10 sur le support 12 comprend également au moins un deuxième joint sec d'étanchéité monobloc 20, réalisé par exemple en silicone. Ce deuxième joint sec 20 est interposé entre la bride 14 et le support 12. Il présente une forme telle qu'il encercle complètement la glace 10, de façon à définir autour de celle-ci une ligne d'étanchéité continue, fermée. Ainsi, le deuxième joint sec 20 assure à lui seul l'étanchéité entre la bride 14 et la structure 12, sur la totalité du pourtour de la glace 10.

Le deuxième joint sec 20 est logé dans une rainure 22 usinée sur la face de la structure 12 tournée vers la bride, c'est-à-dire vers l'extérieur du cockpit (figure 2) ou dans une rainure usinée sur la face de la bride tournée vers la structure 12, c'est-à-dire vers l'intérieur du cockpit.

Dans le mode de réalisation illustré sur la figure 2, le deuxième joint sec 20 présente, en coupe transversale, la forme particulière représentée sur la figure 3. Cette forme se caractérise par trois faces orthogonales entre elles (en section), prévues pour venir se loger dans la rainure 22 et par une face munie de trois lèvres arrondies 24, d'inégales longueurs, prévues pour venir en contact étanche avec l'organe dépourvu de rainure (la bride 14 sur la figure 2) lorsque la bride 14 est fixée sur la structure 12.

Bien qu'un seul deuxième joint sec 20 soit représenté sur les figures, l'invention couvre également le cas où deux joints ou plus sont interposés entre la bride 14 et la structure 12. Chacun des joints est alors monobloc et forme une ligne continue fermée, indépendamment des autres.

Conformément à l'invention, l'étanchéité est donc réalisée uniquement au moyen de joints secs. Cet agencement procure plusieurs avantages. Tout d'abord, lors de la mise en place d'un pare-brise, il n'est pas nécessaire d'appliquer un mastic d'étanchéité tel que du mastic PR et d'attendre sa polymérisation pendant plusieurs heures. On réduit ainsi notablement la durée d'immobilisation de l'avion. Ensuite, lors du démontage du pare-brise, l'absence d'un mastic d'étanchéité évite de décoller ce joint, ce qui est une opération délicate, comme on l'a déjà indiqué. Cela permet aussi de réduire le temps nécessaire au remplacement du pare-brise et donc encore à la durée d'immobilisation de l'avion.

Comme on l'a représenté sur les figures 1 et 2, les vis 16 traversent des trous en vis-à-vis usinés dans la bride monobloc 14 ainsi que dans la structure 12. Plus précisément, les têtes des vis 16 sont tournées vers l'extérieur de l'avion et elles présentent une forme telle que chacune d'entre elles vient en appui contre la bride 14 par une surface plane orthogonale à l'axe de ladite vis. A cet effet, les vis 16 peuvent notamment être des vis à têtes hexagonales.

Cet agencement nécessite une moins grande précision d'usinage que des vis à têtes fraisées, ce qui permet d'augmenter les tolérances d'usinage des différentes pièces et d'en diminuer le coût de fabrication. En outre, il est possible d'augmenter légèrement le diamètre des trous de fixation de la bride afin d'obtenir un léger jeu lors de son positionnement sur la structure de l'aéronef. De surcroît, un meilleur serrage peut être obtenu, ce qui permet d'améliorer la qualité de l'assemblage.

Il est également possible de serrer les vis au moyen d'une clef dynamométrique, ce qui permet de mettre en oeuvre un couple de serrage nominal en adéquation avec des préconisations définies par le constructeur de l'aéronef. L'amélioration du serrage permet aussi de limiter les infiltrations d'humidité entre la bride, la structure de l'aéronef et les vis, et donc de réduire les risques de grippage des vis par corrosion, ce qui facilite leur démontage.

Le démontage des vis est encore facilité par le fait que la forme de leurs têtes, par exemple hexagonale, permet une meilleure préhension au moyen d'une clef appropriée et, par conséquent, l'application d'un couple de desserrage plus élevé que celui qui peut être appliqué à des vis à tête fraisée. De plus, dans le cas de ces dernières, le démontage est souvent réalisé au moyen d'un tournevis, ce qui se traduit par un risque de dérapage pouvant conduire à un endommagement de la bride ou de la structure de l'avion. Ce risque est considérablement réduit lorsqu'on utilise des vis à têtes hexagonales, dont le desserrage est effectué au moyen d'une clef appropriée.

Dans les modes de réalisation préférés de l'invention, les têtes des vis 16 sont logées dans des creux 26 de dimensions appropriées, usinés dans la face de la bride 14 tournée vers l'extérieur de l'avion. Les dimensions des creux 26 sont telles que les têtes des vis 16 soient totalement escamotées dans l'épaisseur de la bride 14 et ne fassent pas saillie sur la face extérieure de celle-ci.

Dans le mode de réalisation illustré sur la figure 2, les creux 26 ainsi formés dans la bride 14 sont recouverts par au moins un profilé ou couvre-joint 28, qui matérialise au moins en partie la surface extérieure de la bride 14. Ce profilé 28 est constitué par une plaque, par exemple métallique, qui est fixée dans un renfoncement usiné sur la surface extérieure de la bride 14. Ce renfoncement a une épaisseur égale à celle de ladite plaque. Les creux 26 sont alors usinés dans le fond du renfoncement. Le profilé 28 est fixé sur la bride 14 par tout moyen approprié tel que des vis à têtes fraisées 29 (figure 1).

Le profilé 28, qui recouvre tout ou partie des creux 26 dans lesquels sont logées les vis 16 de fixation de la bride 14, permet de limiter les perturbations de l'aérodynamique de l'avion engendrées par la fixation de la bride 14.

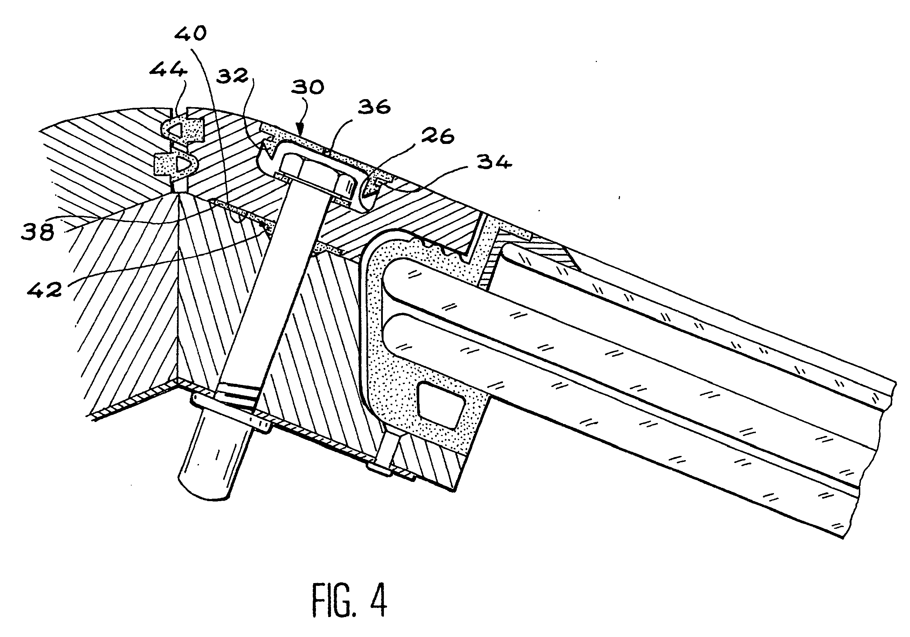

On décrira à présent un deuxième mode de réalisation préféré de l'invention, en se référant à la figure 4.

Ce deuxième mode de réalisation se distingue notamment du premier mode de réalisation décrit précédemment en référence aux figures 1 à 3 par le fait que le profilé 28 est remplacé par des cabochons 30.

Plus précisément, chacun des creux 26 dans lesquels sont reçues les vis 16 est fermé par l'un des cabochons 30. Chaque cabochon 30 affleure la face de la bride 14 tournée vers l'extérieur de l'avion. Comme dans le cas où un profilé est utilisé pour fermer les creux 26, on limite ainsi les perturbations de l'aérodynamique de l'avion dues aux fixations de la bride.

Les cabochons 30 peuvent notamment être fixés dans les creux 26 par emboîtement. A cet effet, chaque cabochon 30 peut être muni de crochets déformables 32, qui viennent se loger élastiquement derrière un rebord en saillie 34 usiné sur l'extrémité extérieure du creux 26, par exemple par usinage grande vitesse.

Cet agencement présente l'avantage de permettre une mise en place simple et rapide. Pour faciliter cette mise en place, les cabochons peuvent être pré-positionnés sur un support, par exemple en papier ou en carton. L'application du support sur le pare-brise permet alors de positionner tous les cabochons sur les différents creux en une seule opération. Lorsque les cabochons ont été emboîtés dans les différents creux, le support est retiré.

Les cabochons 30 sont réalisés dans un matériau présentant des caractéristiques appropriées, notamment une bonne résistance à l'abrasion. Ce matériau peut notamment être une matière plastique polyuréthane.

Chaque cabochon 30 est traversé par un trou 36 de petite section, par exemple de diamètre sensiblement égal à 0,5 mm. Ce trou 36 permet d'équilibrer la pression entre l'extérieur de l'avion et la cavité formée dans chacun des creux 26, en dessous du cabochon 30. En l'absence de ce trou 36, les cabochons 30 pourraient être expulsés en altitude ou déformés vers l'intérieur au sol. Les trous 36 présentent aussi l'avantage de faciliter l'extraction des cabochons 30 par un outil approprié, lors d'un remplacement du pare-brise. Cet outil peut notamment être conçu pour détruire les anciens cabochons afin de les sortir des creux correspondants sans endommager ces derniers.

Dans les différents modes de réalisation de l'invention, les têtes des vis 16 sont avantageusement recouvertes, après leur serrage et avant la mise en place du profilé 28 ou des cabochons 30, d'une substance apte à limiter la pénétration de l'humidité et donc le grippage des vis. Cette substance peut notamment être de la graisse ou de la vaseline.

Le mode de réalisation illustré sur la figure 4 se distingue également du mode de réalisation des figures 1 à 3 par le fait que le deuxième joint sec d'étanchéité monobloc, interposé entre la bride 26 et la structure 12 de l'avion, est un joint 38 de forme généralement plane. Plus précisément, le joint 38 est disposé de façon telle qu'il soit traversé par chacune des vis 16. Comme précédemment, le joint sec 38 est logé dans une rainure 40 usinée dans la bride 14 (figure 4) ou dans la structure 12 de l'avion.

Avantageusement et comme on l'a représenté sur la figure 4, le deuxième joint sec 38 comporte un renflement annulaire 42 autour de chacune des vis 16 qui le traversent. Les renflements 42 présentent l'avantage d'améliorer le contact entre le joint 38 et les vis, de façon à minimiser les infiltrations d'humidité pouvant provenir de l'extérieur de l'avion, vers les trous de vis pratiqués dans la structure 12 de l'avion.

Comme on l'a également représenté sur la figure 4, au moins un autre joint sec d'étanchéité monobloc 44 peut également être monté sur un bord périphérique de la bride 14, tourné vers l'extérieur par rapport à la glace 10 dont la fixation est assurée par cette bride. Ce joint 44 permet de limiter la pénétration de l'humidité de l'extérieur de l'avion vers la partie de la structure 12 sur laquelle est fixée ladite bride 14. A cet effet, le joint 44 vient en contact étanche avec la bride de fixation d'une glace 10 adjacente.

Selon une variante du premier mode de réalisation, non représentée sur les figures, des troisièmes joints secs d'étanchéité, de forme annulaire, sont également placés entre la bride 14 et la structure 12 de l'avion, autour de chacune des vis 16. Ces joints remplissent une fonction comparable à celle des bourrelets 42 formés sur le joint 38 dans le mode de réalisation illustré sur la figure 4. En d'autres termes, ils améliorent l'étanchéité de l'assemblage de la bride 14 sur la structure 12 de l'avion, vis-à-vis de l'humidité qui pourrait pénétrer par les trous de passage des vis 16.

Bien entendu, l'invention n'est pas limitée aux modes de réalisation qui viennent d'être décrits à titre d'exemples. Ainsi, même si la présence d'un ou plusieurs deuxièmes joints tels que les joints 20 et 38 est souhaitable, l'invention couvre également le cas où le dispositif de fixation ne comporte que le premier joint 18. De façon comparable, bien que l'utilisation de vis 16 à surface de contact plane soit préconisée, l'utilisation de vis de forme différente, telle que des vis à tête fraisée, rentre également dans le cadre de l'invention.

## Revendications

1. Dispositif de fixation d'une glace (10) de pare-brise sur une structure (12) d'aéronef, comprenant une bride monobloc (14), des vis (16) munies de têtes, aptes à fixer la bride (14) sur ladite structure (12) en emprisonnant entre elles un bord périphérique de ladite glace (10) de pare-brise, et un premier joint sec d'étanchéité monobloc (18) encerclant ledit bord périphérique, de façon à assurer à lui seul une étanchéité entre l'intérieur et l'extérieur de l'aéronef, **caractérisé en ce que** les têtes des vis (16) sont en contact avec ladite bride (14) par des surfaces planes orthogonales aux axes desdites vis.

2. Dispositif selon la revendication 1, dans lequel au moins un deuxième joint sec d'étanchéité monobloc (20) est logé dans une rainure formée dans une face de la bride (14) tournée vers la structure (12), ou inversement, de façon à assurer à lui seul une étanchéité entre la bride (14) et ladite structure (12).

3. Dispositif selon la revendication 2, dans lequel le deuxième joint sec d'étanchéité monobloc (20) est de forme généralement plane, de façon à être traversé par chacune des vis (16).

4. Dispositif selon la revendication 3, dans lequel le deuxième joint sec d'étanchéité (20), de forme généralement plane, comporte des renflements annulaires qui entourent chacune des vis, de façon à être en contact avec celles-ci.

5. Dispositif selon l'une quelconque des revendications 1 à 4, dans lequel les têtes des vis (16) sont logées dans des creux réalisés dans une face de la bride (14) tournée vers l'extérieur de l'aéronef, de façon à ne pas faire saillie sur ladite face.

6. Dispositif selon la revendication 5, dans lequel chacun des creux est fermé par un cabochon qui affleure ladite face de la bride tournée vers l'extérieur de l'aéronef.

7. Dispositif selon la revendication 6, dans lequel chacun des cabochons est traversé par un trou de petite section.

8. Dispositif selon l'une quelconque des revendications 6 et 7, dans lequel chacun des cabochons est fixé dans le creux de la bride (14) par emboîtement.

9. Dispositif selon la revendication 5, dans lequel les creux sont recouverts par au moins un profilé qui matérialise au moins une partie de ladite face de la bride (14).

10. Dispositif selon l'une quelconque des revendications 5 à 9, dans lequel les têtes des vis (16) sont recouvertes d'une substance apte à limiter la pénétration de l'humidité.

11. Dispositif selon l'une quelconque des revendications 2 à 10, dans lequel le premier joint sec d'étanchéité monobloc (18) comporte des stries (19) sur une face de ce premier joint tournée vers l'extérieur de l'aéronef et en contact avec ladite bride (14).

12. Dispositif selon l'une quelconque des revendications précédentes, dans lequel un troisième joint sec d'étanchéité, de forme annulaire, est placé entre la bride et la structure, autour de chacune des vis.

13. Dispositif selon l'une quelconque des revendications précédentes, dans lequel au moins un autre joint sec d'étanchéité monobloc est monté sur un bord périphérique de la bride (14), tourné vers l'extérieur par rapport à la glace (10) de pare-brise.

## Patentansprüche

1. Vorrichtung zur Befestigung eines Fensterglases (10) einer Windschutzscheibe an einer Struktur (12) eines Luftfahrzeugs, umfassend einen Monoblock-Bügel (14), mit Köpfen versehene Schrauben (16), welche zur Befestigung des Bügels (14) an der Struktur (12) geeignet sind, indem sie einen Umfangsrand des Fensterglases (10) der Windschutzscheibe und eine erste Monoblock-Trockendichtung (18), welche den Umfangsrand umgibt, derart umschließen, dass allein dadurch Dichtheit zwischen dem Innenraum und dem Außenraum des Luftfahrzeugs gewährleistet ist, **dadurch gekennzeichnet, dass** die Schraubenköpfe (16) durch plane Oberflächen, die orthogonal zu den Achsen der Schrauben sind, in Kontakt mit dem Bügel (14) stehen.

2. Vorrichtung nach Anspruch 1, wobei mindestens eine zweite Monoblock-Trockendichtung (20) in einer auf einer der Struktur (12) zugewandten Seite des Bügels (14) ausgebildeten Nut angeordnet ist oder umgekehrt, so dass allein dadurch zwischen dem Bügel (14) und der Struktur (12) Dichtheit gewährleistet ist.

3. Vorrichtung nach Anspruch 2, wobei die zweite Monoblock-Trockendichtung (20) eine allgemein plane Form aufweist, so dass sie von jeder der Schrauben (16) durchsetzt wird.

4. Vorrichtung nach Anspruch 3, wobei die zweite Monoblock-Trockendichtung (20) von allgemein planer Form ringförmige Wülste aufweist, die jede der Schrauben umgeben, so dass sie mit diesen in Kontakt stehen.

5. Vorrichtung nach einem der Ansprüche 1 bis 4, wobei die Schraubenköpfe (16) in in einer vom Luftfahrzeug nach außen gewandten Seite des Bügels (14) eingebrachten Ausnehmungen aufgenommen sind, so dass sie von der Seite nicht vorstehen.

6. Vorrichtung nach Anspruch 5 wobei jede der Ausnehmungen von einer Abdeckscheibe, welche die vom Luftfahrzeug nach außen gewandte Seite des Bügels berührt, verschlossen ist.

7. Vorrichtung nach Anspruch 6, wobei jede der Abdeckscheiben von einem Loch geringen Durchmessers durchsetzt ist.

8. Vorrichtung nach einem der Ansprüche 6 oder 7, wobei jede der Abdeckscheiben in der Ausnehmung des Bügels (14) durch Ineinanderpassen befestigt ist.

9. Vorrichtung nach Anspruch 5, wobei die Ausnehmungen von mindestens einem Profilteil bedeckt sind, der mindestens einen Abschnitt der Seite des Bügels (14) bildet.

10. Vorrichtung nach einem der Ansprüche 5 bis 9, wobei die Köpfe der Schrauben (16) von einer Substanz bedeckt sind, die das Eindringen der Feuchtigkeit einschränkt.

11. Vorrichtung nach einem der Ansprüche 2 bis 10, wobei die erste Monoblock-Trockendichtung (18) Rillen (19) auf einer vom Luftfahrzeug nach außen gewandten und mit dem Bügel (14) in Kontakt stehenden Seite dieser ersten Dichtung aufweist.

12. Vorrichtung nach einem der vorangehenden Ansprüche, wobei eine dritte Trockendichtung in Ringform zwischen dem Bügel und der Struktur um jede der Schrauben herum angeordnet ist.

13. Vorrichtung nach einem der vorangehenden Ansprüche, wobei mindestens eine weitere Monoblock-Trockendichtung an einem in Bezug auf das Fensterglas (10) der Windschutzscheibe nach außen gewandten Umfangsrand des Bügels (14) angebracht ist.

## Claims

1. Device for attachment of a windshield glass (10) onto an aircraft structure (12), comprising a monoblock flange (14), screws (16) with heads capable of fixing the flange (14) onto said structure (12) by trapping a peripheral edge of said glass (10) of the windshield between them, and a first dry monoblock seal (18) surrounding said peripheral edge, such that the seal alone provides leak tightness between the inside and the outside of the aircraft, **characterized in that** the screw heads (16) are in contact with said flange (14) through plane surfaces orthogonal to the centre lines of said screws.

2. Device according to claim 1, in which at least one second dry monoblock seal (20) is housed in a groove formed in a face of the flange (14) facing the structure (12) or conversely such that the seal alone provides leak tightness between the flange (14) and said structure (12).

3. Device according to claim 2, in which the second dry monoblock seal (20) is usually plane, so that each of the screws (16) passes through it.

4. Device according to claim 3, in which the second dry seal (20), which is usually plane, comprises annular swellings that surround each screw, to be in contact with the screws.

5. Device according to any one of claims 1 to 4, in which the heads of the screws (16) are housed in recesses formed in a face of the flange (14) facing towards the outside of the aircraft, so that they do not project on said face.

6. Device according to claim 5, in which each of the recesses is closed by a cap piece that is flush with said face of the flange facing towards the outside of the aircraft.

7. Device according to claim 6, in which a small diameter hole passes through each of the cap pieces.

8. Device according to any one of claims 6 and 7, in which each of the cap pieces is fixed in the recess of the flange (14) in a tight fit.

9. Device according to claim 5, in which the recesses are covered by at least one section that materializes at least part of said face of the flange (14).

10. Device according to any one of claims 5 to 9, in which the heads of the screws (16) are covered by a substance that limits penetration of moisture.

11. Device according to any one of claims 2 to 10, in which the first dry monoblock seal (18) comprises striations (19) on a face of this first seal facing towards the outside of the aircraft and in contact with the said flange (14).

12. Device according to any one of the previous claims, in which a third annular shaped dry seal is placed between the flange and the structure around each of the screws.

13. Device according to any one of the previous claims, in which at least one other dry monoblock seal is installed on a peripheral edge of the flange (14) facing towards the outside of the windshield glass (10).
